# EUROPEAN PATENT SPECIFICATION

(11) **EP 3 357 182 B1**
(45) Date of publication and mention of the grant of the patent: **11.12.2019**
(21) Application number: 16763373.4
(22) Date of filing: 22.08.2016
(51) Int. Cl.: H04L 5/00, H04L 27/00, H04W 72/12, H04W 74/08

(54) **CLEAR CHANNEL ASSESSMENT IN LTE CONTROLLED WI-FI**
BEURTEILUNG EINES FREIEN KANALS FÜR LTE GESTEUERT WIFI
ESTIMATION DE CANAL DÉGAGÉ DANS UN WIFI CONTROLE PAR LTE

(30) Priority: 02.10.2015 US 201514874029
(43) Date of publication of application: 08.08.2018
(73) Proprietor: Qualcomm Incorporated, San Diego, CA 92121-1714 (US)
(72) Inventor: ZHANG, Lei, San Diego, California 92121-1714 (US); LI, Chong, San Diego, California 92121-1714 (US); WU, Xinzhou, San Diego, California 92121-1714 (US); LI, Junyi, San Diego, California 92121-1714 (US)
(74) Representative: Dunlop, Hugh Christopher
(86) International application number: PCT/US2016/048004
(87) International publication number: WO 2017/058394

(56) References cited:
- WO-A1-2012/101481
- US-A1- 2012 182 963
- US-A1- 2014 362 780

## Description

### BACKGROUND

### FIELD OF THE DISCLOSURE

The present disclosure, for example, relates to wireless communication systems, and more particularly to clear channel assessment procedures in a long term evolution controlled Wi-Fi environment.

### DESCRIPTION OF RELATED ART

Wireless communication systems are widely deployed to provide various types of communication content such as voice, video, packet data, messaging, broadcast, and so on. These systems may be multiple-access systems capable of supporting communication with multiple users by sharing the available system resources (*e.g.,* time, frequency, and power). Examples of such multiple-access systems include code-division multiple access (CDMA) systems, time-division multiple access (TDMA) systems, frequency-division multiple access (FDMA) systems, and orthogonal frequency-division multiple access (OFDMA) systems.

By way of example, a wireless multiple-access communication system may include a number of base stations, each simultaneously supporting communication for multiple communication devices, otherwise known as user equipments (UEs). A base station may communicate with UEs on downlink channels (*e.g.,* for transmissions from a base station to a UE) and uplink channels (*e.g.,* for transmissions from a UE to a base station).

Wireless communication systems may include communications using wireless wide area network (WWAN) techniques (*e.g*., cellular communication techniques such as long term evolution (LTE) technology). In some configurations, wireless communication systems may support LTE controlled Wi-Fi (LTE-CW). For example, licensed frequencies in the LTE link may be leveraged to improve performance and coverage of the Wi-Fi link (*e.g.,* wireless local area network (WLAN)). A low-bandwidth LTE channel (or carrier) may be used for essential control functions where data transmissions are then performed over the Wi-Fi link in the unlicensed band. Medium access procedures for Wi-Fi communications typically include a clear channel assessment (CCA) procedure where the device monitors the medium to determine availability prior to transmission. Conventional CCA procedures, however, may not fully support LTE-CW protocols.

US2014/362780 describes LTE/LTE-A uplink carrier aggregation using unlicensed spectrum.

### SUMMARY

The described features generally relate to one or more improved methods, systems, or devices that provide for CCA procedures in a LTE-CW environment. Generally, the described techniques provide for a LTE-CW configured UE to perform a signal detect CCA procedure on any of the channels identified in a resource grant. For example, the UE may receive the resource grant from the base station. The resource grant may identify multiple channels of a shared frequency spectrum for use in uplink communications by the UE, *e.g.,* a wideband resource grant. The UE may also determine that a Wi-Fi access point (AP) is operating nearby. The AP and an associated set of wireless stations (STAs) (*e.g.,* UEs) may be referred to as a basic subscriber set (BSS). Conventionally, a BSS communicates via one channel, often referred to as the primary channel. The UE may identify the primary channel of the neighboring BSS and determine whether the primary channel is within the multiple channels identified in the resource grant. The UE may select any of the multiple channels and perform a signal detect CCA procedure on the selected channel. If the neighbor BSS primary channel is included in the multiple resource grant channels, the UE may select the primary channel to perform the signal detect CCA procedure on. The UE may perform other CCA procedures on the remaining resource grant channels, *e.g*., energy detect CCA procedures and/or guard interval autocorrelation CCA procedures.

A method for wireless communication is described. The method may include: receiving, at a user equipment (UE), a resource grant that identifies a plurality of channels of a shared frequency spectrum subband available to be used for uplink communications; identifying a primary channel associated with a neighboring Wi-Fi basic service set (BSS); determining whether the identified primary channel is within the plurality of channels of the shared frequency spectrum subband; selecting a channel of the plurality of channels of the shared frequency spectrum subband based at least in part on the determining; and performing a signal detect clear channel assessment (CCA) procedure on the selected channel.

Selecting a channel may include determining that the primary channel is within the plurality of channels of the subband; and selecting the primary channel as the selected channel on which to perform the signal detect CCA procedure. Selecting a channel may include determining that the primary channel is outside the plurality of channels of the shared frequency spectrum subband; and selecting a channel of the plurality of channels as the selected channel on which to perform the signal detect CCA procedure. Selecting a channel may include identifying a first channel of the plurality of channels on which a neighboring UE is performing a signal detect CCA procedure; and selecting a second channel as the selected channel on which to perform the signal detect CCA procedure, the second channel being different from the first channel.

The method may include performing an additional CCA procedure on a remaining portion of channels of the plurality of channels, wherein the additional CCA procedure may include at least one of a guard interval autocorrelation CCA procedure, an energy detect CCA procedure, or combinations thereof. The method may include monitoring the primary channel; and transmitting a channel utilization message to a base station according to a predetermined schedule, the channel utilization message may include information associated with an amount of Wi-Fi traffic on the primary channel. The predetermined schedule may include a periodic schedule, or an aperiodic schedule, or combinations thereof. The primary channel may be included in the plurality of channels identified in the resource grant.

An apparatus for wireless communication is described. The apparatus may include: a processor; memory in electronic communication with the processor; and instructions stored in the memory. The instructions may be executable by the processor to: receive, at a user equipment (UE), a resource grant that identifies a plurality of channels of a shared frequency spectrum subband available to be used for uplink communications; identify a primary channel associated with a neighboring Wi-Fi basic service set (BSS); determine whether the identified primary channel is within the plurality of channels of the shared frequency spectrum subband; select a channel of the plurality of channels of the shared frequency spectrum subband based at least in part on the determining; and perform a signal detect clear channel assessment (CCA) procedure on the selected channel.

The instructions executable to select a channel are further executable to: determine that the primary channel is within the plurality of channels of the subband; and select the primary channel as the selected channel on which to perform the signal detect CCA procedure. The instructions executable to select a channel are further executable to: determine that the primary channel is outside the plurality of channels of the shared frequency spectrum subband; and select a channel of the plurality of channels as the selected channel on which to perform the signal detect CCA procedure. The instructions executable to select a channel are further executable to: identify a first channel of the plurality of channels on which a neighboring UE is performing a signal detect CCA procedure; and select a second channel as the selected channel on which to perform the signal detect CCA procedure, the second channel being different from the first channel.

The apparatus may include instructions executable by the processor to: perform an additional CCA procedure on a remaining portion of channels of the plurality of channels, wherein the additional CCA procedure may include at least one of a guard interval autocorrelation CCA procedure, an energy detect CCA procedure, or combinations thereof. The apparatus may include instructions executable by the processor to: monitor the primary channel; and transmit a channel utilization message to a base station according to a predetermined schedule, the channel utilization message may include information associated with an amount of Wi-Fi traffic on the primary channel. The predetermined schedule may include a periodic schedule, or an aperiodic schedule, or combinations thereof. The primary channel may be included in the plurality of channels identified in the resource grant.

An apparatus for wireless communication is described. The apparatus may include: means for receiving, at a user equipment (UE), a resource grant that identifies a plurality of channels of a shared frequency spectrum subband available to be used for uplink communications; means for identifying a primary channel associated with a neighboring Wi-Fi basic service set (BSS); means for determining whether the identified primary channel is within the plurality of channels of the shared frequency spectrum subband; means for selecting a channel of the plurality of channels of the shared frequency spectrum subband based at least in part on the determining; and means for performing a signal detect clear channel assessment (CCA) procedure on the selected channel.

The means for selecting a channel may include: means for determining that the primary channel is within the plurality of channels of the subband; and means for selecting the primary channel as the selected channel on which to perform the signal detect CCA procedure. The means for selecting a channel may include: means for determining that the primary channel is outside the plurality of channels of the shared frequency spectrum subband; and means for selecting a channel of the plurality of channels as the selected channel on which to perform the signal detect CCA procedure.

The means for selecting a channel may include: means for identifying a first channel of the plurality of channels on which a neighboring UE is performing a signal detect CCA procedure; and means for selecting a second channel as the selected channel on which to perform the signal detect CCA procedure, the second channel being different from the first channel. The means for selecting a channel may include: means for performing an additional CCA procedure on a remaining portion of channels of the plurality of channels, wherein the additional CCA procedure may include at least one of a guard interval autocorrelation CCA procedure, an energy detect CCA procedure, or combinations thereof.

The apparatus may include: means for monitoring the primary channel; and means for transmitting a channel utilization message to a base station according to a predetermined schedule, the channel utilization message may include information associated with an amount of Wi-Fi traffic on the primary channel. The predetermined schedule may include a periodic schedule, or an aperiodic schedule, or combinations thereof. The primary channel is included in the plurality of channels identified in the resource grant.

A non-transitory computer-readable medium storing computer-executable code for wireless communication is described. The code executable by a processor to: receive, at a user equipment (UE), a resource grant that identifies a plurality of channels of a shared frequency spectrum subband available to be used for uplink communications; identify a primary channel associated with a neighboring Wi-Fi basic service set (BSS); determine whether the identified primary channel is within the plurality of channels of the shared frequency spectrum subband; select a channel of the plurality of channels of the shared frequency spectrum subband based at least in part on the determining; and perform a signal detect clear channel assessment (CCA) procedure on the selected channel.

The code executable by a processor to select a channel are further executable to: determine that the primary channel is within the plurality of channels of the subband; and select the primary channel as the selected channel on which to perform the signal detect CCA procedure. The code executable by a processor to select a channel are further executable to: determine that the primary channel is outside the plurality of channels of the shared frequency spectrum subband; and select a channel of the plurality of channels as the selected channel on which to perform the signal detect CCA procedure.

The code executable by a processor to select a channel are further executable to: identify a first channel of the plurality of channels on which a neighboring UE is performing a signal detect CCA procedure; and select a second channel as the selected channel on which to perform the signal detect CCA procedure, the second channel being different from the first channel. The non-transitory computer-readable medium may include code executable by the processor to: perform an additional CCA procedure on a remaining portion of channels of the plurality of channels, wherein the additional CCA procedure may include at least one of a guard interval autocorrelation CCA procedure, an energy detect CCA procedure, or combinations thereof. The non-transitory computer-readable medium may include code executable by the processor to: monitor the primary channel; and transmit a channel utilization message to a base station according to a predetermined schedule, the channel utilization message may include information associated with an amount of Wi-Fi traffic on the primary channel.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Characteristics of the concepts disclosed herein, both their organization and method of operation, together with associated advantages will be better understood from the following description when considered in connection with the accompanying figures. Each of the figures is provided for the purpose of illustration and description only, and not as a definition of the limits of the claims.

### BRIEF DESCRIPTION OF THE DRAWINGS

A further understanding of the nature and advantages of the present invention may be realized by reference to the following drawings. In the appended figures, similar components or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.
FIG. 1 shows a diagram of a wireless communication system, in accordance with various aspects of the present disclosure;
FIG. 2 shows a diagram of an example of communications between a user equipment and a base station in a wireless communication system, in accordance with various aspects of the present disclosure;
FIG. 3 shows a diagram of a wireless communication system, in accordance with various aspects of the present disclosure;
FIG. 4 shows a block diagram of a device configured for use in wireless communication, in accordance with various aspects of the present disclosure;
FIG. 5 shows a block diagram of a device configured for use in wireless communication, in accordance with various aspects of the present disclosure;
FIG. 6 shows a block diagram of a user equipment for use in wireless communication, in accordance with various aspects of the present disclosure;
FIG. 7 is a flow chart illustrating an example of a method for wireless communication, in accordance with various aspects of the present disclosure;
FIG. 8 is a flow chart illustrating an example of a method for wireless communication, in accordance with various aspects of the present disclosure; and
FIG. 9 is a flow chart illustrating an example of a method for wireless communication, in accordance with various aspects of the present disclosure.

### DETAILED DESCRIPTION

One benefit of Wi-Fi wireless communications is high peak data communication rates available. In LTE-CW, a licensed band LTE link is used to improve performance and coverage of an unlicensed band Wi-Fi link. For example, the UE and/or LTE base station use WWAN resources to exchange frame alignment, timing, and other radio frame configuration information associated with Wi-Fi controlled transmissions, *e.g*., LTE-CW transmissions. A Wi-Fi configured UE is notified of a primary 20 MHz channel when the UE joins a BSS. The primary channel is typically fixed and used for communications between the AP and all associated UEs forming the BSS. Since all BSS uplink transmissions must occur using the primary 20 MHz channel, the UEs must perform signal detect CCA procedure only in the primary 20 MHz channel. Therefore, all UEs associated with the same Wi-Fi AP have to perform signal detect CCA in the same 20 MHz channel. Wi-Fi configured UEs have no option to choose where to perform signal detect CCA.

According to aspects of the present description, a UE is configured for LTE-CW wireless communications. The UE may communicate with an LTE base station using LTE links or carriers for control and/or configuration information. For example, the UE may receive a resource grant that identifies a plurality of 20 MHz channels the UE is to use for uplink communications. The UE may also be configured to Wi-Fi communications and therefore determine that a BSS is operating nearby. The UE may identify the primary channel of the BSS and determine whether the primary channel is included in the plurality of channels identified in the resource grant. Generally, the UE may select any of the plurality of channels to perform a signal detect CCA procedure on. In some configurations where the UE determines that the neighbor BSS primary channel is included in the plurality of channels, the UE may select the primary channel to perform the signal detect CCA procedure on.

In some aspects, the UE may also be configured for UE-assisted uplink scheduling in LTE-CW systems. For example, the UE may monitor the primary channel(s) for any or all BSSs that are operating nearby. The UE may send information to its LTE base station (*e.g.,* a channel utilization message) that identifies the usage or amount of traffic on the primary channels. The UE may report the primary channel usage information periodically, aperiodically, or both. The UE may send the report using an LTE link, for example. The LTE base station may use the channel utilization information for scheduling uplink communications for the UE. In some configurations, the LTE base station may include the primary channel in the plurality of channels identified in the resource grant for the UE, *e.g.,* the LTE base station may avoid using only secondary 20 MHz, or secondary 40 MHz, or secondary 80 MHz Wi-Fi channels of the Wi-Fi BSSs in its neighborhood.

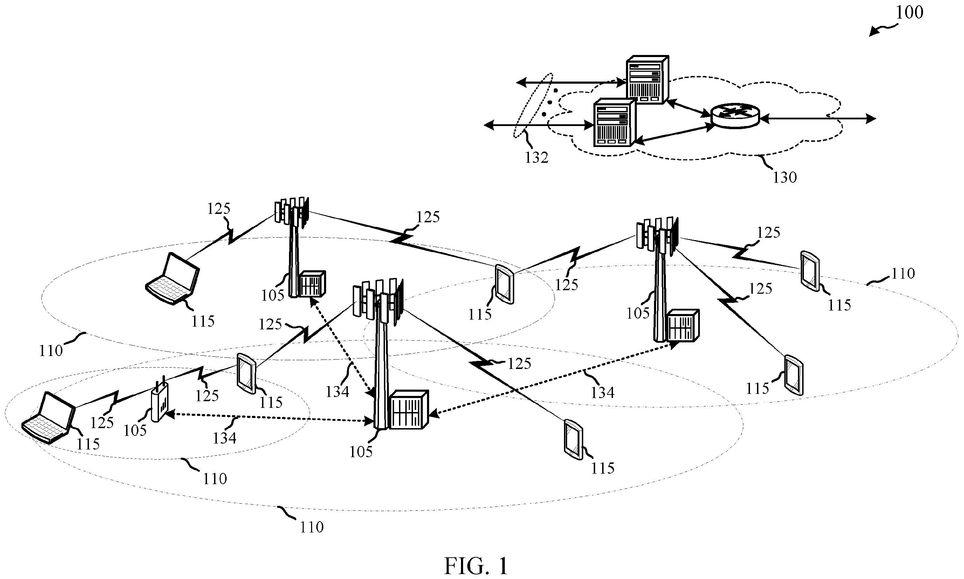

**FIG. 1** illustrates an example of a wireless communications system 100 in accordance with various aspects of the disclosure. The wireless communications system 100 includes base stations 105, UEs 115, and a core network 130. The core network 130 may provide user authentication, access authorization, tracking, Internet Protocol (IP) connectivity, and other access, routing, or mobility functions. The base stations 105 interface with the core network 130 through backhaul links 132 (*e.g.,* S1, *etc.)* and may perform radio configuration and scheduling for communication with the UEs 115, or may operate under the control of a base station controller (not shown). In various examples, the base stations 105 may communicate, either directly or indirectly (*e.g*., through core network 130), with each other over backhaul links 134 (*e.g.,* XI, *etc.*), which may be wired or wireless communication links.

The base stations 105 may wirelessly communicate with the UEs 115 via one or more base station antennas. Each of the base station 105 sites may provide communication coverage for a respective geographic coverage area 110. In some examples, base stations 105 may be referred to as a base transceiver station, a radio base station, an access point, a radio transceiver, a NodeB, eNodeB (eNB), Home NodeB, a Home eNodeB, or some other suitable terminology. The geographic coverage area 110 for a base station 105 may be divided into sectors making up only a portion of the coverage area (not shown). The wireless communications system 100 may include base stations 105 of different types (*e.g*., macro and/or small cell base stations). There may be overlapping geographic coverage areas 110 for different technologies.

In some examples, the wireless communications system 100 is an LTE/LTE-A network. In LTE/LTE-A networks, the term evolved Node B (eNB) may be generally used to describe the base stations 105, while the term UE may be generally used to describe the UEs 115. The wireless communications system 100 may be a Heterogeneous LTE/LTE-A network in which different types of eNBs provide coverage for various geographical regions. For example, each eNB or base station 105 may provide communication coverage for a macro cell, a small cell, and/or other types of cell. The term "cell" is a 3GPP term that can be used to describe a base station, a carrier or component carrier associated with a base station, or a coverage area (*e.g.,* sector, *etc.*) of a carrier or base station, depending on context.

A macro cell generally covers a relatively large geographic area (*e.g*., several kilometers in radius) and may allow unrestricted access by UEs with service subscriptions with the network provider. A small cell is a lower-powered base station, as compared with a macro cell, that may operate in the same or different (*e.g.,* licensed, unlicensed, *etc.*) frequency bands as macro cells. Small cells may include pico cells, femto cells, and micro cells according to various examples. A pico cell may cover a relatively smaller geographic area and may allow unrestricted access by UEs with service subscriptions with the network provider. A femto cell also may cover a relatively small geographic area (*e.g.,* a home) and may provide restricted access by UEs having an association with the femto cell (*e.g.,* UEs in a closed subscriber group (CSG), UEs for users in the home, and the like). An eNB for a macro cell may be referred to as a macro eNB. An eNB for a small cell may be referred to as a small cell eNB, a pico eNB, a femto eNB or a home eNB. An eNB may support one or multiple (*e.g.,* two, three, four, and the like) cells (*e.g.,* component carriers).

The wireless communications system 100 may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for either synchronous or asynchronous operations.

The communication networks that may accommodate some of the various disclosed examples may be packet-based networks that operate according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use Hybrid ARQ (HARQ) to provide retransmission at the MAC layer to improve link efficiency. In the control plane, the Radio Resource Control (RRC) protocol layer may provide establishment, configuration, and maintenance of an RRC connection between a UE 115 and the base stations 105 or core network 130 supporting radio bearers for the user plane data. At the Physical (PHY) layer, the transport channels may be mapped to Physical channels.

The UEs 115 are dispersed throughout the wireless communications system 100, and each UE 115 may be stationary or mobile. A UE 115 may also include or be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. A UE 115 may be a cellular phone, a personal digital assistant (PDA), a wireless modem, a wireless communication device, a handheld device, a tablet computer, a laptop computer, a cordless phone, a wireless local loop (WLL) station, or the like. A UE may be able to communicate with various types of base stations and network equipment including macro eNBs, small cell eNBs, relay base stations, and the like.

The communication links 125 shown in wireless communications system 100 may include uplink (UL) transmissions from a UE 115 to a base station 105, and/or downlink (DL) transmissions, from a base station 105 to a UE 115. The downlink transmissions may also be called forward link transmissions while the uplink transmissions may also be called reverse link transmissions. Each communication link 125 may include one or more carriers, where each carrier may be a signal made up of multiple sub-carriers (*e.g*., waveform signals of different frequencies) modulated according to the various radio technologies described above. Each modulated signal may be sent on a different sub-carrier and may carry control information (*e.g.,* reference signals, control channels, *etc.*)*,* overhead information, user data, *etc.* The communication links 125 may transmit bidirectional communications using FDD (*e.g.,* using paired spectrum resources) or TDD operation (*e.g.,* using unpaired spectrum resources). Frame structures for FDD (*e.g.,* frame structure type 1) and TDD (*e.g.,* frame structure type 2) may be defined.

In some embodiments of the system 100, base stations 105 and/or UEs 115 may include multiple antennas for employing antenna diversity schemes to improve communication quality and reliability between base stations 105 and UEs 115. Additionally or alternatively, base stations 105 and/or UEs 115 may employ multiple-input, multiple-output (MIMO) techniques that may take advantage of multi-path environments to transmit multiple spatial layers carrying the same or different coded data.

Wireless communications system 100 may support operation on multiple cells or carriers, a feature which may be referred to as carrier aggregation (CA) or multi-carrier operation. A carrier may also be referred to as a component carrier (CC), a layer, a channel, *etc.* The terms "carrier," "component carrier," "cell," and "channel" may be used interchangeably herein. A UE 115 may be configured with multiple downlink CCs and one or more uplink CCs for carrier aggregation. Carrier aggregation may be used with both FDD and TDD component carriers.

Wireless communications system 100 may support LTE-CW communications. In an LTE-CW system, LTE-CW UEs (*e.g.,* UE 115) may perform signal detect CCA procedures on any channel allocated for uplink wireless communications. For example, the UE 115 may receive a resource grant from a LTE-CW base station (*e.g*., base station 105) that identifies a plurality of channels for uplink communications. The resource grant may be a wideband resource grant and may identify, in some examples, four 20 MHz channels for uplink communications. The UE 115 may also determine or detect a BSS operating nearby. The UE 115 may identify the primary channel associated with the neighboring BSS and determine whether the primary channel is included in the plurality of channels. Generally, the UE 115 may select any channel of the plurality of channels and perform a signal detect CCA procedure on the selected channel. In some configurations where the primary channel of the neighboring BSS is included in the plurality of channels, the UE 115 may select the primary channel and perform the signal detect CCA procedure.

Wireless communications system 100 may support UE-assisted uplink scheduling for LTE-CW communications. For example, UEs 115 may generally be configured to perform LTE-CW communications with a base station 105. UEs 115 may also determine and monitor neighboring BSS(s) channel usage. For example, the UEs 115 may monitor the primary channel of any neighboring BSS and report the channel utilization to the base station 105 according to a predetermined schedule. The base station 105 may, in some configurations, use the channel utilization information when scheduling uplink resource grants for the UEs 115. The base stations 105 may include the primary channel for any neighboring BSS in the resource grant to the UEs 115, in some examples. Thus, the channel utilization information provided from the UE 115 to the base station 105 may permit the UE 115 to assist the base station 105 in identifying uplink resources most suitable to the UE 115.

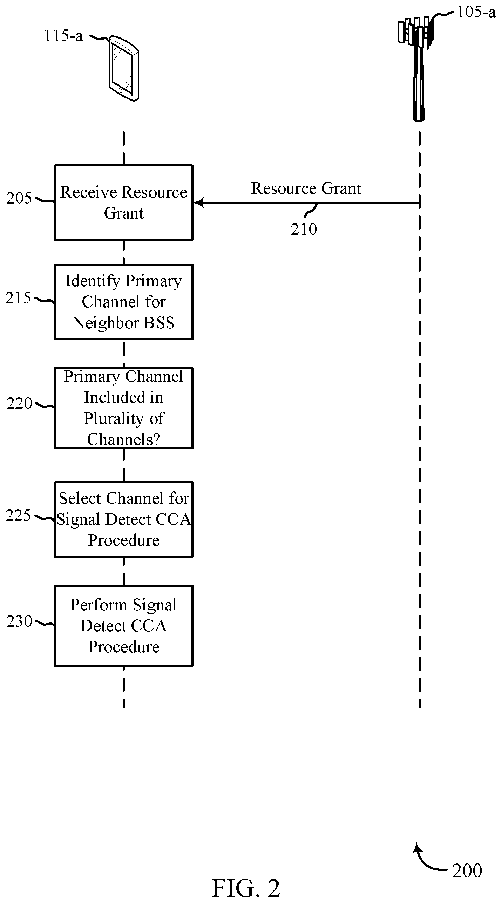

**FIG.** 2 shows an example diagram 200 of aspects of communications between a UE 115-a and a base station 105-a for use in wireless communication, in accordance with various aspects of the present disclosure. The UE 115-a and/or base station 105-a are configured for LTE-CW communications. UE 115-a may be an example of aspects of a UE 115 described with reference to FIG. 1. Base station 105-a may be an example of aspects of a base station 105 described with reference to FIG. 1. In some examples, UE 115-a may include a processing system and an interface configured to perform the described functions.

At 205, UE 115-a may receive a resource grant 210 from base station 105-a. The resource grant may identify several channels for the UE 115-a to use for uplink communications. The plurality of channels may be Wi-Fi channels of a shared frequency spectrum subband. In one non-limiting examples, the resource grant may identify four 20 MHz channels of the shared frequency spectrum subband.

At 215, the UE 115-a may identify a primary channel for a neighboring BSS. For example, a Wi-Fi AP may be located proximate to the UE 115-a and the UE 115-a may detect one or more Wi-Fi transmissions between the Wi-Fi AP and its associated wireless stations (*e.g.,* other UEs 115). As previously discussed, each BSS typically operates using a primary channel (*e.g.,* one 20 MHz channel) for wireless communications. The primary channel may be different for each BSS. When multiple BSSs are operating close by, the UE 115-a may identify the primary channel for each neighboring BSS.

At 220, the UE 115-a may determine whether the primary channel of the neighbor BSS is included in the plurality of channels identified in the resource grant from the base station 105-a. For example, the UE 115-a may identify each channel of the plurality of channels and compare the primary channel to the identified channels. The primary channel may or may not be included in the plurality of channels of the shared frequency spectrum band.

At 225, the UE 115-a may select a channel of the plurality of channels based on determining whether the primary channel is included in the plurality of channels. If the primary channel is included in the plurality of channels (*e.g.*, the neighbor BSS primary channel is available for uplink communications), the UE 115-a may select the primary channel. If the primary channel is not included in the plurality of channels (*e.g*., the neighbor BSS primary channel is not available for uplink communications), the UE 115-a may select any channel of the plurality of channels. In some aspects, the selected channel may not be fixed with respect to the total bandwidth, *e.g*., within the plurality of channels identified in the resource grant.

In some aspects, the UE 115-a selecting the channel may include the UE 115-a determining that a neighboring UE is performing a signal detect CCA procedure on one channel of the plurality of channels. For example, the UE 115-a may determine that the neighbor UE is performing a signal detect CCA procedure on a first channel of the plurality of channels. The UE 115-a may then select a second channel to perform a signal detect CCA procedure on.

At 230, the UE 115-a may perform a signal detect CCA procedure on the selected channel. A signal detect CCA procedure may include the UE 115-a decoding at least a portion of a Wi-Fi transmission occurring on the selected channel, *e.g.,* a header portion of the Wi-Fi transmission. The signal detect CCA procedure may include the UE 115-a detecting the start of an orthogonal frequency division multiplexing (OFDM) packet at or above -82 dBm with greater than ninety (90) percent probability with four micro seconds. The UE 115-a may perform other CCA procedures on the remaining channels of the plurality of channels, *e.g*., an energy detect CCA procedure, a guard interval autocorrelation CCA procedure, or both CCA procedures. An energy detect CCA procedure may include the UE 115-a detecting any signal at or above -62 dBm within four microseconds. A guard interval autocorrelation CCA procedure may include the UE 115-a detecting any valid 20 MHz OFDM PPDU at or above -72 dBm with greater than ninety (90) percent probability within 25 micro seconds.

In some aspects, the UE 115-a may also be configured for UE-assisted uplink scheduling at the base station 105-a. For example, the UE 115-a may identify and monitor the primary channel associated with any neighboring BSS. The UE 115-a may provide channel usage or utilization information to the base station 105-a. The channel utilization information may be based on the monitoring of the primary channels and may include an indication of the amount of Wi-Fi traffic on the primary channel. The UE 115-a may monitor and/or provide the channel utilization information according to a schedule, *e.g.,* a periodic schedule that recurs every fixed time period and/or an aperiodic schedule that is randomly selected by or provided to the UE 115-a. The base station 105-a may use the channel utilization information reported by the UE 115-a to identify channels for uplink communications for the UE 115-a (and other UEs operating in the area). In some examples, the base station 105-a may include the primary channel identified in the channel utilization information in the plurality of channels identified in the resource grant.

In some aspects, the base station 105-a may also perform CCA procedures on channels. The channels the base station 105-a selects to perform the signal detect CCA procedures on may use a different selection scheme than is used by UE 115-a. For example, the base station 105-a may perform a signal detect CCA procedure and/or an energy detect CCA procedure on all channels. That is, the LTE-CW configured base station 105-a may support parallel signal detect CCA procedures on all 20 MHz channels.

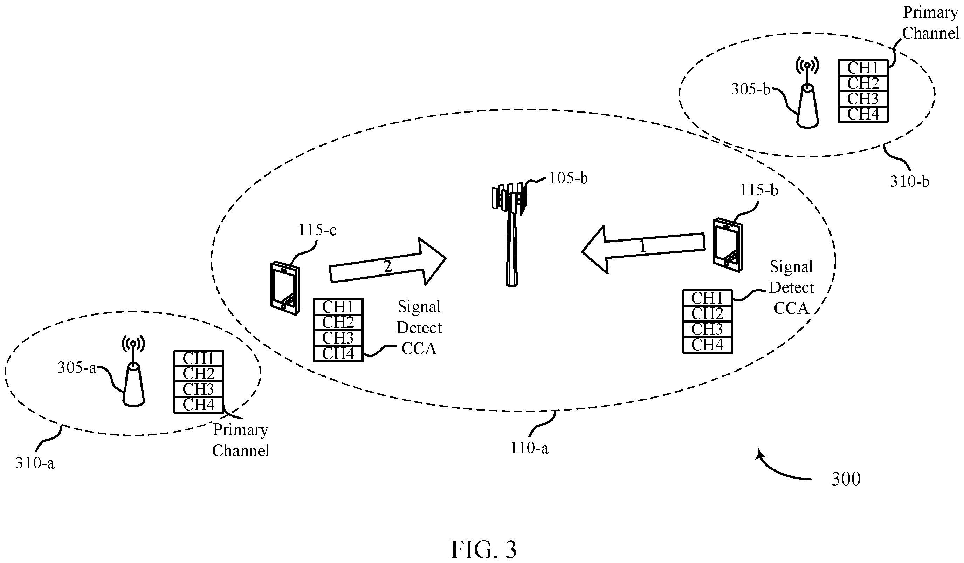

**FIG. 3** illustrates an example of a wireless communications system 300 in accordance with various aspects of the disclosure. The wireless communications system 300 includes base station 105-b, UEs 115-b and 115-c, and Wi-Fi access points (APs) 305-a and 305-b. Wireless communications system 300 may illustrate aspects of the wireless communications system 100 and/or diagram 200 described with reference to FIGs. 1 and 2. UEs 115-b and/or 115-c may be examples of a UE 115 described with reference to FIGs. 1 and 2. Base station 105-b may be an example of a base station 105 described with reference to FIGs. 1 and 2. In some examples, a system device, such as one of the UEs 115 and/or base stations 105 may execute one or more sets of codes to control the functional elements of the device to perform some or all of the functions described below.

Wi-Fi APs 305 may be configured for WLAN communications, *e.g*., Wi-Fi communications implementing the Institute of Electrical and Electronics Engineers (IEEE) 802.11 family of standards. Each AP 305 may form a respective BSS that consists of the AP 305 and any associated wireless stations (STAs) (*e.g*., other UEs 115). Typically, each BSS 310 has an associated primary channel to be used for Wi-Fi communications. In the example wireless communications system 300, BSS 310-a uses channel 4 as the primary channel and BSS 310-b uses channel 1 as the primary channel. Generally, each STA that is a part of the BSS 310 would perform CCA procedures on the primary channel for the BSS 310. For example, each STA may be required to perform the signal detect CCA procedure on the primary channel according to the hierarchical scheme outlined for Wi-Fi communications.

UEs 115-b and/or 115-c may be configured for LTE-CW communications with base station 105-b. UEs 115-b and/or 115-c may be mobile and therefore move around within the coverage area 110-a of base station 105-b. UE 115-b may be located near or adjacent to BSS 310-b such that UE 115-b can detect, monitor, *etc.,* the Wi-Fi traffic occurring using channel 1 of BSS 310-b. Similarly, UE 115-c may be located near or adjacent to BSS 310-a such that UE 115-c can detect, monitor, *etc.,* the Wi-Fi traffic occurring using channel 4 of BSS 310-b.

Each of UEs 115-b and/or 115-c may receive a resource grant from base station 105-b that identifies a plurality of channels available for uplink communications. The plurality of channels may be of a shared frequency spectrum subband and, in the example wireless communications system 300, may include channels 1-4. Each channel may be a 20 MHz channel, a 40 MHz channel, an 80 MHz channel, or some other bandwidth channel. The channels may include more than one subbands.

UEs 115-b and/or 115-c may identify the primary channel associated with its neighboring Wi-Fi BSS. For example, UE 115-b may identify channel 1 as the primary channel associated with Wi-Fi BSS 310-b and UE 115-c may identify channel 4 as the primary channel associated with Wi-Fi BSS 310-a. The UEs 115-b and/or 115-c may determine whether the identified primary channel is within or included in the plurality of channels of the shared frequency spectrum subband, as identified in the resource grant. Primary channel 1 of Wi-Fi BSS 310-b is within the plurality of channels for UE 115-b and primary channel 4 of Wi-Fi BSS 310-a is within the plurality of channels for UE 115-c.

UEs 115-b and/or 115-c may select a channel of the plurality of channels of the shared frequency spectrum subband based on determining whether the neighboring Wi-Fi BSS primary channels are included. The UEs 115-b and/or 115-c may perform a signal detect CCA procedure on the selected channel.

In some examples where the neighboring Wi-Fi BSS primary channel is included in the plurality of channels, the UEs 115 may select the primary channel as the selected channel and perform the signal detect CCA procedure on the primary channel. In the example wireless communications system 300, UE 115-b may select channel 1 as the selected channel and perform a signal detect CCA procedure on channel 1, *i.e.,* the primary channel for neighboring Wi-Fi BSS 310-b. UE 115-c may select channel 4 as the selected channel and perform a signal detect CCA procedure on channel 4, *i.e.,* the primary channel for neighboring Wi-Fi BSS 310-a. UEs 115-b and/or 115-c may perform other CCA procedures on the remaining channels (*e.g.,* channels 1-3 for UE 115-c and channels 2-4 for UE 115-b). Examples of other CCA procedures include, but are not limited to, an energy detect CCA procedure and/or a guard interleave autocorrelation CCA procedure.

Based on the CCA procedures, the UEs 115-b and/or 115-c may perform uplink communications 1 and 2, respectively, to base station 105-b. Uplink communications 1 and 2 may be performed simultaneously by UEs 115-b and 115-c.

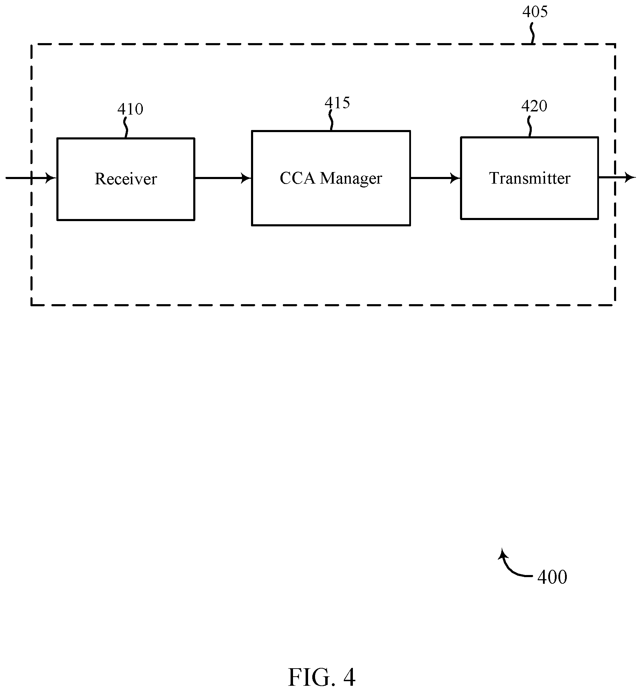

**FIG. 4** shows a block diagram 400 of a device 405 for use in wireless communication, in accordance with various aspects of the present disclosure. The device 405 may be an example of one or more aspects of a UE 115 described with reference to FIGs. 1, 2, or 3. The device 405 may include a receiver 410, a CCA manager 415, and/or a transmitter 420. The device 405 may also be or include a processor (not shown). Each of these components may be in communication with each other.

The components of the device 405 may, individually or collectively, be implemented using one or more application-specific integrated circuits (ASICs) adapted to perform some or all of the applicable functions in hardware. Alternatively, the functions may be performed by one or more other processing units (or cores), on one or more integrated circuits. In other examples, other types of integrated circuits may be used (*e.g.,* Structured/Platform ASICs, Field Programmable Gate Arrays (FPGAs), and other Semi-Custom ICs), which may be programmed in any manner known in the art. The functions of each component may also be implemented, in whole or in part, with instructions embodied in a memory, formatted to be executed by one or more general or application-specific processors.

The receiver 410 may receive information such as packets, user data, and/or control information associated with various information channels (*e.g*., control channels, data channels, *etc*.). The receiver 410 may be configured to receive transmissions including resource grants and/or transmissions associated with a CCA procedure. Information may be passed on to the CCA manager 415, and to other components of the device 405.

The CCA manager 415 may monitor, control, provide a means for, or otherwise manage aspects of CCA procedures for the device 405. For example, the CCA manager 415 may receive, at the device 405, a resource grant that identifies a plurality of channels of a shared frequency spectrum subband available to be used for uplink communications. The CCA manager 415 may identify a primary channel associated with a neighboring Wi-Fi BSS and determine whether the primary channel is within the plurality of channels of the shared frequency spectrum subband. The CCA manager 415 may select a channel of the plurality of channels of the shared frequency spectrum subband based at least in part on the determining. The CCA manager 415 may perform a signal detect CCA procedure on the selected channel.

In some aspects, the CCA manager 415 may manage aspects of monitoring channel utilization information on primary channels for neighboring Wi-Fi BSSs. The CCA manager 415 may send a message to a base station including information associated with Wi-Fi traffic monitored on the primary channels of the neighboring Wi-Fi BSSs.

The transmitter 420 may transmit the one or more signals received from other components of the device 405. The transmitter 420 may transmit transmissions including signals associated with a CCA procedure and/or neighboring Wi-Fi BSS channel utilization. In some examples, the transmitter 420 may be collocated with the receiver 410 in a transceiver module.

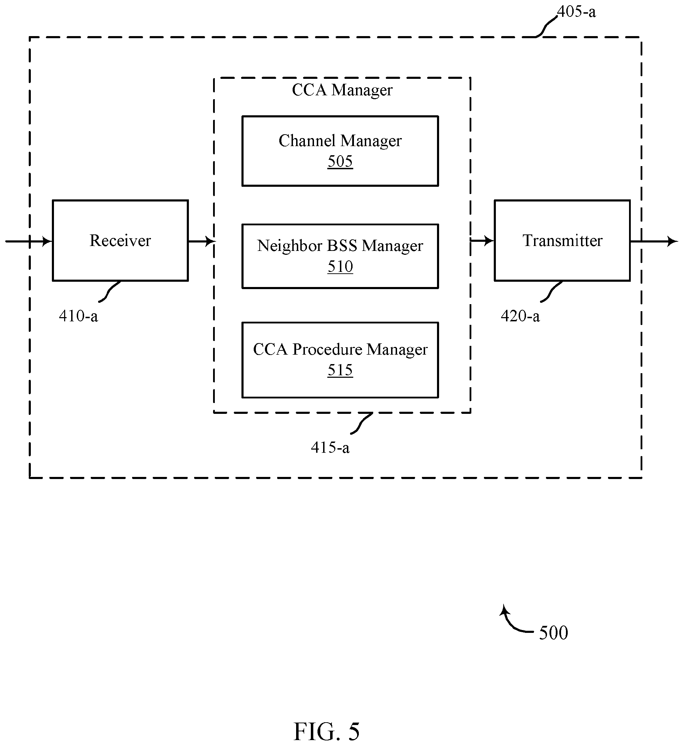

**FIG.** 5 shows a block diagram 500 of a device 405-a for use in wireless communication, in accordance with various examples. The device 405-a may be an example of one or more aspects of a UE 115 described with reference to FIGs. 1, 2, or 3. The device 405-a may also be an example of a device 405 described with reference to FIG. 4. The device 405-a may include a receiver 410-a, a CCA manager 415-a, and/or a transmitter 420-a, which may be examples of the corresponding components of device 405. The device 405-a may also include a processor (not shown). Each of these components may be in communication with each other. The CCA manager 415-a may include a channel manager 505, a neighbor BSS manager 510, and/or a CCA procedure manager 515. The receiver 410-a and the transmitter 420-a may perform the functions of the receiver 410 and the transmitter 420, of FIG. 4, respectively.

The channel manager 505 may monitor, control, provide a means for, or otherwise manage aspects of channel identification and selection for the device 405-a. For example, the channel manager 505 may receive a resource grant that identifies a plurality of channels of a shared frequency spectrum subband available to be used for uplink communications. The channel manager 505 may identify a first channel of the plurality of channels on which a neighboring UE is performing a signal detect CCA procedure on.

The neighbor BSS manager 510 may monitor, control, provide a means for, or otherwise manage aspects of neighboring Wi-Fi BSS identification, detection, and monitoring for the device 405-a. For example, the neighbor BSS manager 510 may identify a primary channel associated with a neighboring Wi-Fi BSS and determine whether the primary channel is within the plurality of channels of the shared frequency spectrum subband. The neighbor BSS manager 510 may determine that the primary channel is within the plurality of channels. The neighbor BSS manager 510 may determine that the primary channel is outside or not within the plurality of channels.

In some aspects, the neighbor BSS manager 510 may monitor the primary channel according to a predetermined schedule. The neighbor BSS manager 510 may, alone or in cooperation with the transmitter 420-a, transmit a channel utilization message to a base station. The channel utilization message may include information associated with the amount of Wi-Fi traffic on the primary channel. The predetermined schedule may be a periodic schedule or an aperiodic schedule. The primary channel may be included in the plurality of channels identified in the resource grant.

The CCA procedure manager 515 may monitor, control, provide a means for, or otherwise manage aspects of performing CCA procedures for the device 405-a. For example, the CCA procedure manager 515 may select a channel of the plurality of channels of the shared frequency spectrum subband based at least in part on the determining of whether the primary channel is within the plurality of channels. The CCA procedure manager 515 may perform a signal detect CCA procedure on the selected channel.

In the example where the primary channel is within the plurality of channels, the CCA procedure manager 515 may select the primary channel as the selected channel on which to perform the signal detect CCA procedure. In the example where the primary channel is not within the plurality of channels, the CCA procedure manager 515 may select any channel of the plurality of channels as the selected channel on which to perform the signal detect CCA procedure.

In the example where the neighbor BSS manager 510 has determined that a neighboring UE is performing a signal detect CCA procedure on a first channel of the plurality of channels, the CCA procedure manager 515 may select a second channel as the selected channel on which to perform the signal detect CCA procedure. The second channel may be different from the first channel.

In some aspects, the CCA procedure manager 515 may perform an additional CCA procedure on a remaining portion of channels of the plurality of channels. The additional CCA procedure may include an energy detect CCA procedure and/or a guard interval autocorrelation CCA procedure.

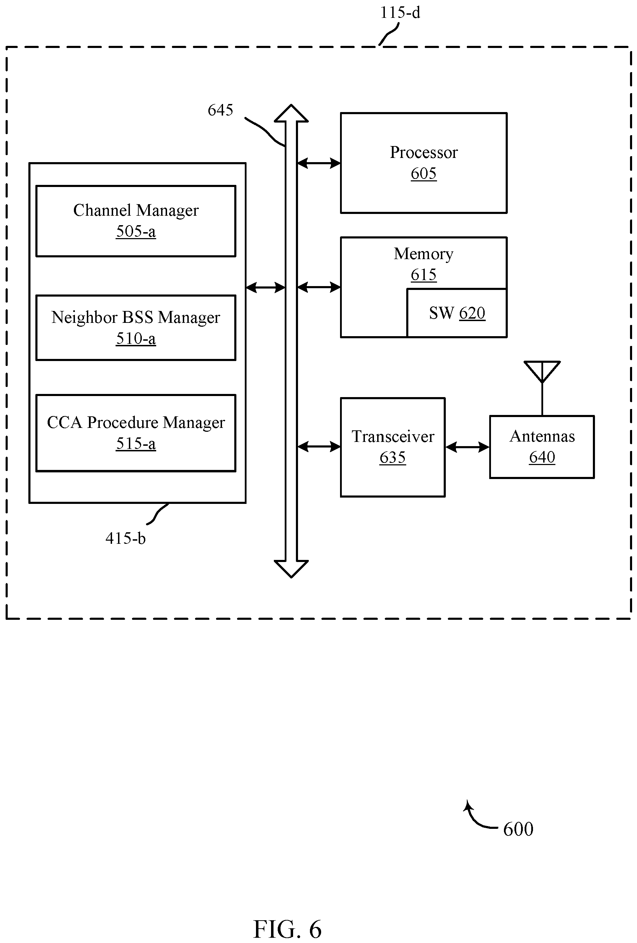

**FIG. 6** shows a system 600 for use in wireless communication, in accordance with various examples. System 600 may include a UE 115-d, which may be an example of the UEs 115 of FIGs. 1-3 and/or an example of aspects of devices 405 of FIGs. 4 and 5. Generally, the UE 115-d may be configured for LTE-CW communications that utilize the CCA procedures in accordance with the described techniques.

The UE 115-d may generally include components for bi-directional voice and data communications including components for transmitting communications and components for receiving communications. The UE 115-d may include antenna(s) 640, a transceiver 635, a processor 605, and memory 615 (including software (SW) 620), which each may communicate, directly or indirectly, with each other (*e.g.,* via one or more buses 645). The transceiver 635 may be configured to communicate bi-directionally, via the antenna(s) 640 and/or one or more wired or wireless links, with one or more networks, as described above. For example, the transceiver 635 may be configured to communicate bi-directionally with base stations 105 with reference to FIGs. 1-3. The transceiver 635 may include a modem configured to modulate the packets and provide the modulated packets to the antenna(s) 640 for transmission, and to demodulate packets received from the antenna(s) 640. While the UE 115-d may include a single antenna 640, the UE 115-d may have multiple antennas 640 capable of concurrently transmitting and/or receiving multiple wireless transmissions. The transceiver 635 may be capable of concurrently communicating with one or more base stations 105 via multiple component carriers.

The UE 115-d may include a CCA manager 415-b, which may perform the functions described above for the CCA manager 415 of device 405 of FIGs. 4 and 5. For example, the CCA manager 415-b may include a channel manager 505-a, a neighbor BSS manager 510-a, a CCA procedure manager 515-b, which may be examples and perform the functions of the channel manager 505, neighbor BSS manager 510, and CCA procedure manager 515, respectively, of FIG. 5.

The memory 615 may include random access memory (RAM) and read-only memory (ROM). The memory 615 may store computer-readable, computer-executable software/firmware code 620 containing instructions that are configured to, when executed, cause the processor 605 to perform various functions described herein (*e.g.,* receive a resource grant including a plurality of channels and determine whether a primary channel of a neighboring Wi-Fi BSS is within the plurality of channels, *etc.*). Alternatively, the computer-readable, computer-executable software/firmware code 620 may not be directly executable by the processor 605 but be configured to cause a computer (*e.g*., when compiled and executed) to perform functions described herein. The processor 605 may include an intelligent hardware device, *e.g.,* a central processing unit (CPU), a microcontroller, an application-specific integrated circuit (ASIC), *etc.*

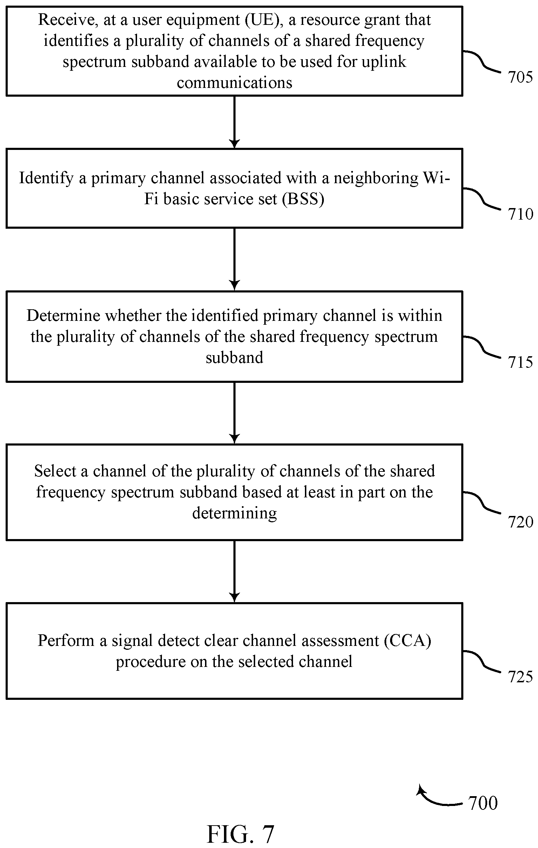

**FIG. 7** is a flow chart illustrating an example of a method 700 for wireless communication, in accordance with various aspects of the present disclosure. For clarity, the method 700 is described below with reference to aspects of a UE described with reference to FIGs. 1-3 and 6, and/or aspects of one or more of the devices 405 described with reference to FIGs. 4 and 5. In some examples, a UE may execute one or more sets of codes to control the functional elements of the UE to perform the functions described below. Additionally or alternatively, the UE may perform one or more of the functions described below using special-purpose hardware.

At block 705, the method 700 may include the UE receiving a resource grant that identifies a plurality of channels of a shared frequency spectrum subband available for uplink communications. The operation(s) at block 705 may be performed using the channel manager 505 described with reference to FIGs. 5 and 6.

At block 710, the method 700 may include the UE identifying a primary channel associated with a neighboring Wi-Fi BSS. The operation(s) at block 710 may be performed using the neighbor BSS manager 510 described with reference to FIGs. 5 and 6.

At block 715, the method 700 may include the UE determining whether the identified primary channel is within the plurality of channels of the shared frequency spectrum subband. The operation(s) at block 715 may be performed using the neighbor BSS manager 510 described with reference to FIGs. 5 and 6.

At block 720, the method 700 may include the UE selecting a channel of the plurality of channels of the shared frequency spectrum subband based at least in part on the determining. The operation(s) at block 720 may be performed using the CCA procedure manager 515 described with reference to FIGs. 5 and 6.

At block 725, the method 700 may include the UE performing a signal detect CCA procedure on the selected channel. The operation(s) at block 720 may be performed using the CCA procedure manager 515 described with reference to FIGs. 5 and 6.

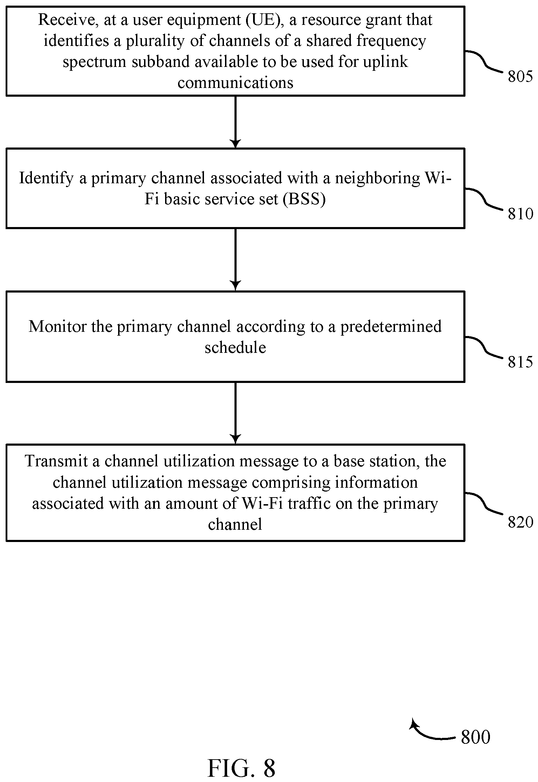

**FIG. 8** is a flow chart illustrating an example of a method 800 for wireless communication, in accordance with various aspects of the present disclosure. For clarity, the method 800 is described below with reference to aspects of a UE described with reference to FIGs. 1-3 and 6, and/or aspects of one or more of the devices 405 described with reference to FIGs. 4 and 5. In some examples, a UE may execute one or more sets of codes to control the functional elements of the UE to perform the functions described below. Additionally or alternatively, the UE may perform one or more of the functions described below using special-purpose hardware.

At block 805, the method 800 may include the UE receiving a resource grant that identifies a plurality of channels of a shared frequency spectrum subband available for uplink communications. The operation(s) at block 805 may be performed using the channel manager 505 described with reference to FIGs. 5 and 6.

At block 810, the method 800 may include the UE identifying a primary channel associated with a neighboring Wi-Fi BSS. The operation(s) at block 810 may be performed using the neighbor BSS manager 510 described with reference to FIGs. 5 and 6.

At block 815, the method 800 may include the UE monitoring the primary channel according to a predetermined schedule. The operation(s) at block 815 may be performed using the neighbor BSS manager 510 described with reference to FIGs. 5 and 6.

At block 820, the method 800 may include the UE transmitting a channel utilization message to a base station, the channel utilization message comprising information associated with an amount of Wi-Fi traffic on the primary channel. The operation(s) at block 820 may be performed using the neighbor BSS manager 510 described with reference to FIGs. 5 and 6.

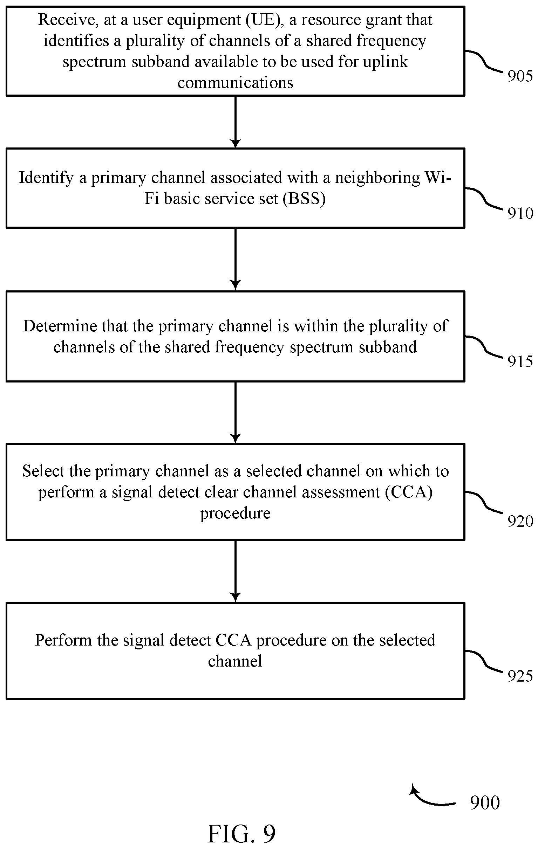

**FIG.** 9 is a flow chart illustrating an example of a method 900 for wireless communication, in accordance with various aspects of the present disclosure. For clarity, the method 900 is described below with reference to aspects of a UE described with reference to FIGs. 1-3 and 6, and/or aspects of one or more of the devices 405 described with reference to FIGs. 4 and 5. In some examples, a UE may execute one or more sets of codes to control the functional elements of the UE to perform the functions described below. Additionally or alternatively, the UE may perform one or more of the functions described below using special-purpose hardware.

At block 905, the method 900 may include the UE receiving a resource grant that identifies a plurality of channels of a shared frequency spectrum subband available for uplink communications. The operation(s) at block 905 may be performed using the channel manager 505 described with reference to FIGs. 5 and 6.

At block 910, the method 900 may include the UE identifying a primary channel associated with a neighboring Wi-Fi BSS. The operation(s) at block 910 may be performed using the neighbor BSS manager 510 described with reference to FIGs. 5 and 6.

At block 915, the method 900 may include the UE determining that the identified primary channel is within the plurality of channels of the shared frequency spectrum subband. The operation(s) at block 915 may be performed using the neighbor BSS manager 510 described with reference to FIGs. 5 and 6.

At block 920, the method 900 may include the UE selecting the primary channel as a selected channel on which to perform a signal detect CCA procedure. The operation(s) at block 920 may be performed using the CCA procedure manager 515 described with reference to FIGs. 5 and 6.

At block 925, the method 900 may include the UE performing a signal detect CCA procedure on the selected channel. The operation(s) at block 920 may be performed using the CCA procedure manager 515 described with reference to FIGs. 5 and 6.

Thus, the methods 700-900 may provide for wireless communication. It should be noted that the methods 700-900 are just example implementations and that the operations of the methods 700-900 may be rearranged or otherwise modified such that other implementations are possible.

Techniques described herein may be used for various wireless communications systems such as CDMA, TDMA, FDMA, OFDMA, SC-FDMA, and other systems. The terms "system" and "network" are often used interchangeably. A CDMA system may implement a radio technology such as CDMA2000, Universal Terrestrial Radio Access (UTRA), *etc.* CDMA2000 covers IS-2000, IS-95, and IS-856 standards. IS-2000 Releases 0 and A are commonly referred to as CDMA2000 IX, IX, *etc.* IS-856 (TIA-856) is commonly referred to as CDMA2000 1xEV-DO, High Rate Packet Data (HRPD), *etc.* UTRA includes Wideband CDMA (WCDMA) and other variants of CDMA. A TDMA system may implement a radio technology such as Global System for Mobile Communications (GSM). An OFDMA system may implement a radio technology such as Ultra Mobile Broadband (UMB), Evolved UTRA (E-UTRA), IEEE 802.11 (WiFi), IEEE 802.16 (WiMAX), IEEE 802.20, Flash-OFDM™, *etc.* UTRA and E-UTRA are part of Universal Mobile Telecommunication System (UMTS). 3GPP Long Term Evolution (LTE) and LTE-Advanced (LTE-A) are new releases of UMTS that use E-UTRA. UTRA, E-UTRA, UMTS, LTE, LTE-A, and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies, including cellular (*e.g.,* LTE) communications over an unlicensed and/or shared bandwidth. The description above, however, describes an LTE/LTE-A system for purposes of example, and LTE terminology is used in much of the description above, although the techniques are applicable beyond LTE/LTE-A applications.

The detailed description set forth above in connection with the appended drawings describes examples and does not represent the only examples that may be implemented or that are within the scope of the claims. The terms "example" and "exemplary," when used in this description, mean "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a digital signal processor (DSP), an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, *e.g.,* a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a computer-readable medium. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations. As used herein, including in the claims, the term "and/or," when used in a list of two or more items, means that any one of the listed items can be employed by itself, or any combination of two or more of the listed items can be employed. For example, if a composition is described as containing components A, B, and/or C, the composition can contain A alone; B alone; C alone; A and B in combination; A and C in combination; B and C in combination; or A, B, and C in combination. Also, as used herein, including in the claims, "or" as used in a list of items (for example, a list of items prefaced by a phrase such as "at least one of' or "one or more of') indicates a disjunctive list such that, for example, a list of "at least one of A, B, or C" means A or B or C or AB or AC or BC or ABC (*i.e.,* A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, EEPROM, flash memory, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

## Claims

1. A method (700) for wireless communication, comprising:
receiving (705), at a user equipment, UE, a resource grant that identifies a plurality of channels of a shared frequency spectrum subband available to be used for uplink communications;
identifying (710) a primary channel associated with a neighboring Wi-Fi basic service set, BSS;
determining (715)whether the identified primary channel is within the plurality of channels of the shared frequency spectrum subband;
selecting (720) a channel of the plurality of channels of the shared frequency spectrum subband based at least in part on the determining; and
performing (725) a signal detect clear channel assessment, CCA, procedure on the selected channel.

2. The method of claim 1, wherein selecting a channel comprises:
determining that the primary channel is within the plurality of channels of the subband;and
selecting the primary channel as the selected channel on which to perform the signal detect CCA procedure.

3. The method of claim 1, wherein selecting a channel comprises:
determining that the primary channel is outside the plurality of channels of the shared frequency spectrum subband; and
selecting a channel of the plurality of channels as the selected channel on which to perform the signal detect CCA procedure.

4. The method of claim 1, wherein selecting a channel comprises:
identifying a first channel of the plurality of channels on which a neighboring UE is performing a signal detect CCA procedure; and
selecting a second channel as the selected channel on which to perform the signal detect CCA procedure, the second channel being different from the first channel.

5. The method of claim 1, further comprising:
performing an additional CCA procedure on a remaining portion of channels of the plurality of channels, wherein the additional CCA procedure comprises at least one of a guard interval autocorrelation CCA procedure, an energy detect CCA procedure, or combinations thereof.

6. The method of claim 1, further comprising:
monitoring the primary channel; and
transmitting a channel utilization message to a base station according to a predetermined schedule, the channel utilization message comprising information associated with an amount of Wi-Fi traffic on the primary channel.

7. The method of claim 6, wherein the predetermined schedule comprises a periodic schedule, or an aperiodic schedule, or combinations thereof, or wherein the primary channel is included in the plurality of channels identified in the resource grant.

8. An apparatus for wireless communication, comprising:
means for receiving, at a user equipment, UE, a resource grant that identifies a plurality of channels of a shared frequency spectrum subband available to be used for uplink communications;
means for identifying a primary channel associated with a neighboring Wi-Fi basic service set, BSS;
means for determining whether the identified primary channel is within the plurality of channels of the shared frequency spectrum subband;
means for selecting a channel of the plurality of channels of the shared frequency spectrum subband based at least in part on the determining; and
means for performing a signal detect clear channel assessment, CCA procedure on the selected channel.

9. The apparatus of claim 8, wherein the means for selecting a channel comprises:
means for determining that the primary channel is within the plurality of channels of the subband; and
means for selecting the primary channel as the selected channel on which to perform the signal detect CCA procedure.

10. The apparatus of claim 8, wherein the means for selecting a channel comprises:
means for determining that the primary channel is outside the plurality of channels of the shared frequency spectrum subband; and
means for selecting a channel of the plurality of channels as the selected channel on which to perform the signal detect CCA procedure.

11. The apparatus of claim 8, wherein the means for selecting a channel comprises:
means for identifying a first channel of the plurality of channels on which a neighboring UE is performing a signal detect CCA procedure; and
means for selecting a second channel as the selected channel on which to perform the signal detect CCA procedure, the second channel being different from the first channel.

12. The apparatus of claim 8, wherein the means for selecting a channel comprises:
means for performing an additional CCA procedure on a remaining portion of channels of the plurality of channels, wherein the additional CCA procedure comprises at least one of a guard interval autocorrelation CCA procedure, an energy detect CCA procedure, or combinations thereof.

13. The apparatus of claim 8, further comprising:
means for monitoring the primary channel; and
means for transmitting a channel utilization message to a base station according to a predetermined schedule, the channel utilization message comprising information associated with an amount of Wi-Fi traffic on the primary channel.

14. The apparatus of claim 13, wherein the predetermined schedule comprises a periodic schedule, or an aperiodic schedule, or combinations thereof.

15. A non-transitory computer-readable medium storing computer-executable code for wireless communication, the code executable by a processor to perform the steps of any one of claims 1 to 7.

## Patentansprüche

1. Ein Verfahren (700) für Drahtloskommunikation, das Folgendes aufweist:
Empfangen (705), an einer Nutzereinrichtung bzw. UE (UE = user equipment), einer Ressourcenzuteilung, die eine Vielzahl von Kanälen eines gemeinsam verwendeten Frequenzspektrumsubbandes identifiziert, das verfügbar ist, um für Uplink- bzw. Aufwärtsstreckenkommunikationen verwendet zu werden;
Identifizieren (710) eines primären Kanals, der mit einem benachbarten Wi-Fi-BSS (BSS = basic service set) assoziiert ist;
Bestimmen (715), ob der identifizierte primäre Kanal innerhalb der Vielzahl von Kanälen des gemeinsam verwendeten Frequenzspektrumsubbandes ist;
Auswählen (720) eines Kanals der Vielzahl von Kanälen des gemeinsam verwendeten Frequenzspektrumsubbandes basierend wenigstens teilweise auf dem Bestimmen; und
Durchführen (722) einer Signaldetektions-CCA-Prozedur (CCA = clear channel assessment bzw. Überprüfung hinsichtlich eines freien Kanals) auf dem ausgewählten Kanal.

2. Verfahren nach Anspruch 1, wobei das Auswählen eines Kanals Folgendes aufweist:
Bestimmen, dass der primäre Kanal innerhalb der Vielzahl von Kanälen des Subbandes ist; und
Auswählen des primären Kanals als den ausgewählten Kanal, auf dem die Signaldetektions-CCA-Prozedur durchgeführt werden soll.

3. Verfahren nach Anspruch 1, wobei das Auswählen eines Kanals Folgendes aufweist:
Bestimmen, dass der primäre Kanal außerhalb der Vielzahl von Kanälen des gemeinsam verwendeten Frequenzspektrumsubbandes ist; und
Auswählen eines Kanals der Vielzahl von Kanälen als den ausgewählten Kanal, auf dem die Signaldetektions-CCA-Prozedur durchgeführt werden soll.

4. Verfahren nach Anspruch 1, wobei das Auswählen eines Kanals Folgendes aufweist:
Identifizieren eines ersten Kanals der Vielzahl von Kanälen, auf dem eine benachbarte UE eine Signaldetektions-CCA-Prozedur durchführt; und
Auswählen eines zweiten Kanals als den ausgewählten Kanal, auf dem die Signaldetektions-CCA-Prozedur durchgeführt werden soll, wobei sich der zweite Kanal von dem ersten Kanal unterscheidet.

5. Verfahren nach Anspruch 1, das weiter Folgendes aufweist:
Durchführen einer zusätzlichen CCA-Prozedur auf einem verbleibenden Teil von Kanälen der Vielzahl von Kanälen, wobei die zusätzliche CCA-Prozedur wenigstens eines von einer Schutzintervall-Autokorrelations-CCA-Prozedur, einer Energiedetektions-CCA-Prozedur oder Kombinationen davon aufweist.

6. Verfahren nach Anspruch 1, das weiter Folgendes aufweist:
Überwachen des primären Kanals; und
Senden einer Kanalnutzungsnachricht an eine Basisstation gemäß einer vorbestimmten Einteilung, wobei die Kanalnutzungsnachricht Information aufweist, die mit einem Umfang an Wi-Fi-Verkehr auf dem primären Kanal assoziiert ist.

7. Verfahren nach Anspruch 6, wobei die vorbestimmte Einteilung eine periodische Einteilung oder eine aperiodische Einteilung oder Kombinationen davon aufweist, oder wobei der primäre Kanal in der Vielzahl von Kanälen enthalten ist, die in der Ressourcenzuteilung identifiziert sind.

8. Eine Vorrichtung zur Drahtloskommunikation, die Folgendes aufweist:
Mittel zum Empfangen, an einer Nutzereinrichtung bzw. UE (UE = user equipment), einer Ressourcenzuteilung, die eine Vielzahl von Kanälen eines gemeinsam verwendeten Frequenzspektrumsubbandes identifiziert, das verfügbar ist, um für Uplink- bzw. Aufwärtsstreckenkommunikationen verwendet zu werden;
Mittel zum Identifizieren eines primären Kanals, der mit einem benachbarten Wi-Fi-BSS (BSS = basic service set) assoziiert ist;
Mittel zum Bestimmen, ob der identifizierte primäre Kanal innerhalb der Vielzahl von Kanälen des gemeinsam verwendeten Frequenzspektrumsubbandes ist;
Mittel zum Auswählen eines Kanals der Vielzahl von Kanälen des gemeinsam verwendeten Frequenzspektrumsubbandes basierend wenigstens teilweise auf dem Bestimmen; und
Mittel zum Durchführen einer Signaldetektions-CCA-Prozedur (CCA = clear channel assessment bzw. Überprüfung hinsichtlich eines freien Kanals) auf dem ausgewählten Kanal.

9. Vorrichtung nach Anspruch 8, wobei die Mittel zum Auswählen eines Kanals Folgendes aufweisen:
Mittel zum Bestimmen, dass der primäre Kanal innerhalb der Vielzahl von Kanälen des Subbandes ist; und
Mittel zum Auswählen des primären Kanals als den ausgewählten Kanal, auf dem die Signaldetektions-CCA-Prozedur durchgeführt werden soll.

10. Vorrichtung nach Anspruch 8, wobei die Mittel zum Auswählen eines Kanals Folgendes aufweisen:
Mittel zum Bestimmen, dass der primäre Kanal außerhalb der Vielzahl von Kanälen des gemeinsam verwendeten Frequenzspektrumsubbandes ist; und
Mittel zum Auswählen eines Kanals der Vielzahl von Kanälen als den ausgewählten Kanal, auf dem die Signaldetektions-CCA-Prozedur durchgeführt werden soll.

11. Vorrichtung nach Anspruch 8, wobei die Mittel zum Auswählen eines Kanals Folgendes aufweisen:
Mittel zum Identifizieren eines ersten Kanals der Vielzahl von Kanälen, auf dem eine benachbarte UE eine Signaldetektions-CCA-Prozedur durchführt; und
Mittel zum Auswählen eines zweiten Kanals als den ausgewählten Kanal, auf dem die Signaldetektions-CCA-Prozedur durchgeführt werden soll, wobei sich der zweite Kanal von dem ersten Kanal unterscheidet.

12. Vorrichtung nach Anspruch 8, wobei die Mittel zum Auswählen eines Kanals Folgendes aufweisen:
Mittel zum Durchführen einer zusätzlichen CCA-Prozedur auf einem verbleibenden Teil von Kanälen der Vielzahl von Kanälen, wobei die zusätzliche CCA-Prozedur wenigstens eines von einer Schutzintervall-Autokorrelations-CCA-Prozedur, einer Energiedetektions-CCA-Prozedur oder Kombinationen davon aufweist.

13. Vorrichtung nach Anspruch 8, die weiter Folgendes aufweist:
Mittel zum Überwachen des primären Kanals; und
Mittel zum Senden einer Kanalnutzungsnachricht an eine Basisstation gemäß einer vorbestimmten Einteilung, wobei die Kanalnutzungsnachricht Information aufweist, die mit einem Umfang an Wi-Fi-Verkehr auf dem primären Kanal assoziiert ist.

14. Vorrichtung nach Anspruch 13, wobei die vorbestimmte Einteilung eine periodische Einteilung oder eine aperiodische Einteilung oder Kombinationen davon aufweist.

15. Ein nicht transitorisches computerlesbares Medium, das von einem Computer ausführbaren Code für Drahtloskommunikation speichert, wobei der Code durch einen Prozessor ausgeführt werden kann zum Durchführen der Schritte nach einem der Ansprüche 1 bis 7.

## Revendications

1. Un procédé (700) de communication sans fil, comprenant :
la réception (705), au niveau d'un équipement d'utilisateur, UE, d'un octroi de ressource qui identifie une pluralité de canaux d'une sous-bande de spectre de fréquence partagée disponible de façon à être utilisée pour des communications en liaison montante,
l'identification (710) d'un canal primaire associé à un ensemble de services de base, BSS, Wi-Fi voisin,
la détermination (715) si le canal primaire identifié est à l'intérieur de la pluralité de canaux de la sous-bande de spectre de fréquence partagée,
la sélection (720) d'un canal de la pluralité de canaux de la sous-bande de spectre de fréquence partagée en fonction au moins en partie de la détermination, et
l'exécution (725) d'une procédure d'évaluation de canal libre, CCA, de détection de signal sur le canal sélectionné.

2. Le procédé selon la Revendication 1, où la sélection d'un canal comprend :
la détermination que le canal primaire est à l'intérieur de la pluralité de canaux de la sous-bande, et
la sélection du canal primaire en tant que canal sélectionné sur lequel exécuter la procédure CCA de détection de signal.

3. Le procédé selon la Revendication 1, où la sélection d'un canal comprend :
la détermination que le canal primaire est à l'extérieur de la pluralité de canaux de la sous-bande de spectre de fréquence partagée, et
la sélection d'un canal de la pluralité de canaux en tant que canal sélectionné sur lequel exécuter le procédure CCA de détection de signal.

4. Le procédé selon la Revendication 1, où la sélection d'un canal comprend :
l'identification d'un premier canal de la pluralité de canaux sur lequel un UE voisin exécute une procédure CCA de détection de signal, et
la sélection d'un deuxième canal en tant que canal sélectionné sur lequel exécuter le procédure CCA de détection de signal, le deuxième canal étant différent du premier canal.

5. Le procédé selon la Revendication 1, comprenant en outre :
l'exécution d'une procédure CCA additionnelle sur une partie restante de canaux de la pluralité de canaux, où la procédure CCA additionnelle comprend au moins une procédure parmi une procédure CCA d'autocorrélation d'intervalle de garde, une procédure CCA de détection d'énergie, ou des combinaisons de celles-ci.

6. Le procédé selon la Revendication 1, comprenant en outre :
la surveillance du canal primaire, et
la transmission d'un message d'utilisation de canal à une station de base en fonction d'un échéancier prédéterminé, le message d'utilisation de canal contenant des informations associées à une quantité de trafic Wi-Fi sur le canal primaire.

7. Le procédé selon la Revendication 6, où l'échéancier prédéterminé comprend un échéancier périodique ou un échéancier apériodique, ou des combinaisons de ceux-ci, ou où le canal primaire est inclus dans la pluralité de canaux identifiés dans l'octroi de ressource.

8. Un appareil de communication sans fil, comprenant :
un moyen de réception, au niveau d'un équipement d'utilisateur, UE, d'un octroi de ressource qui identifie une pluralité de canaux d'une sous-bande de spectre de fréquence partagée disponible de façon à être utilisée pour des communications en liaison montante,
un moyen d'identification d'un canal primaire associé à un ensemble de services de base, BSS, Wi-Fi voisin,
un moyen de détermination si le canal primaire identifié est à l'intérieur de la pluralité de canaux de la sous-bande de spectre de fréquence partagée,
un moyen de sélection d'un canal de la pluralité de canaux de la sous-bande de spectre de fréquence partagée en fonction au moins en partie de la détermination, et
un moyen d'exécution d'une procédure d'évaluation de canal libre, CCA, de détection de signal sur le canal sélectionné.

9. L'appareil selon la Revendication 8, où le moyen de sélection d'un canal comprend :
un moyen de détermination que le canal primaire est à l'intérieur de la pluralité de canaux de la sous-bande: et
un moyen de sélection du canal primaire en tant que canal sélectionné sur lequel exécuter le procédure CCA de détection de signal.

10. L'appareil selon la Revendication 8, où le moyen de sélection d'un canal comprend :
un moyen de détermination que le canal primaire est à l'extérieur de la pluralité de canaux de la sous-bande de spectre de fréquence partagée, et
un moyen de sélection d'un canal de la pluralité de canaux en tant que canal sélectionné sur lequel exécuter le procédure CCA de détection de signal.

11. L'appareil selon la Revendication 8, où le moyen de sélection d'un canal comprend :
un moyen d'identification d'un premier canal de la pluralité de canaux sur lequel un UE voisin exécute une procédure CCA de détection de signal, et
un moyen de sélection d'un deuxième canal en tant que canal sélectionné sur lequel exécuter le procédure CCA de détection de signal, le deuxième canal étant différent du premier canal.

12. L'appareil selon la Revendication 8, où le moyen de sélection d'un canal comprend :
un moyen d'exécution d'une procédure CCA additionnelle sur une partie restante de canaux de la pluralité de canaux, où la procédure CCA additionnelle comprend au moins une procédure parmi une procédure CCA d'autocorrélation d'intervalle de garde, une procédure CCA de détection d'énergie, ou des combinaisons de celles-ci.

13. L'appareil selon la Revendication 8, comprenant en outre :
un moyen de surveillance du canal primaire, et
un moyen de transmission d'un message d'utilisation de canal à une station de base en fonction d'un échéancier prédéterminé, le message d'utilisation de canal contenant des informations associées à une quantité de trafic Wi-Fi sur le canal primaire.

14. L'appareil selon la Revendication 13, où l'échéancier prédéterminé comprend un échéancier périodique ou un échéancier apériodique, ou des combinaisons de ceux-ci.

15. Un support lisible par ordinateur non transitoire conservant en mémoire du code exécutable par ordinateur destiné à une communication sans fil, le code étant exécutable par un processeur de façon à exécuter les opérations selon l'une quelconque des Revendications 1 à 7.
